# EUROPÄISCHE PATENTSCHRIFT

(11) **EP 1 442 809 B1**
(45) Veröffentlichungstag und Bekanntmachung des Hinweises auf die Patenterteilung: **07.03.2007**
(21) Anmeldenummer: 04010488.7
(22) Anmeldetag: 29.03.2001
(51) Int. Cl.: B21K 1/70, B21D 53/24

(54) **Verfahren zur Herstellung von Hohlkörperelementen**
Method for producing parts with hollow body
Procédé de production d'éléments à corps creux

(30) Priorität: 31.03.2000 DE 10016227
(43) Veröffentlichungstag der Anmeldung: 04.08.2004
(62) Teilanmeldung aus: 01933778.1
(73) Patentinhaber: PROFIL-Verbindungstechnik GmbH & Co. KG, 61381 Friedrichsdorf (DE)
(72) Erfinder: Babej, Jiri, 35423 Lich (DE); Vieth, Michael, 61118 Bad Vilbel (DE); Humpert, Richard, Dr., 61191 Rosbach v.d. Höhe (DE)
(74) Vertreter: Manitz, Finsterwald & Partner GbR

(56) Entgegenhaltungen:
- US-A- 2 096 623
- US-A- 2 206 740
- US-A- 3 999 659

## Beschreibung

Die vorliegende Erfindung betrifft ein Verfahren zur Herstellung von Hohlkörperelementen wie Mutterelemente zur Anbringung an üblicherweise aus Blech bestehenden Bauteilen, insbesondere zur Herstellung von Hohlkörperelementen mit einem zumindest im wesentlichen quadratischen oder rechteckigen Außenumriss durch Ablängung von einzelnen Elementen von einem in Form einer Profilstange oder eines Wickels (Coils) vorliegenden Profil nach vorheriger Stanzung von jeweiligen Löchern in das Profil und gegebenenfalls mit anschließender Ausbildung eines Gewindezylinders gemäß dem Oberbegriff des Anspruchs 1. So ein Verfahren ist aus der US-A-2 206 740 bekannt. Ein Verfahren sowie entsprechende Hohlkörperelemente sind beispielsweise aus der US-PS 4,971,499 bekannt. Entsprechende Hohlkörperelemente werden auch von der Firma Profil Verbindungstechnik GmbH & Co. KG in Deutschland unter der Bezeichnung HI-Rechteckmutter verkauft.

Aufgabe der vorliegenden Erfindung ist es, ein Verfahren der eingangs genannten Art so weiter zu entwickeln, dass Hohlkörperelemente insbesondere rechteckige Mutterelemente bei preisgünstiger Herstellung erhalten werden können, die bessere mechanische Eigenschaften haben, beispielsweise eine höhere Ausziehkraft und eine verbesserte Verdrehsicherheit und darüber hinaus eine herabgesetzte Kerbwirkung zeigen, so dass die Ermüdungseigenschaften von Zusammenbauteilen bestehend aus einem üblicherweise aus Blech bestehenden Bauteil und an diesem angebrachten Hohlkörperelementen auch unter dynamischen Lasten verbessert werden.

Die Aufgabe wird durch die Merkmale des Anspruchs 1 gelöst. Zur Lösung dieser Aufgabe wird verfahrensmäßig so vorgegangen, dass ein Napfvorgang gleichzeitig mit der Ausbildung des zylindrischen Vorsprungs erfolgt, d.h. mit dem Durchsetzvorgang durchgeführt wird, dass der Durchsetzvorgang, bei dem mittels eines Durchsetzstempels eine zylindrische Vertiefung in der einen Seite des Profils und ein zylindrischer Vorsprung auf der anderen Seite des Profils erzeugt wird, unmittelbar von dem Lochvorgang gefolgt wird, bei dem das Profil im Bereich der zylindrischen Vertiefung mittels eines Lochstempels durchlocht wird und dass der Durchmesser des Durchsetzstempels im Bereich seines das Durchsetzen herbeiführenden Stirnendes so gewählt wird, dass er zumindest im Wesentlichen dem Durchmesser des Lochstempels entspricht.

Die Herstellung aus einem Profil, das entweder in Form einer Profilstange oder in Form eines Wickels vorliegt, bei dem das Profil bereits die Grundform des Elementes aufweist, ermöglicht es, auf verhältnismäßig kostspielige Kaltschlagmaschinen zu verzichten und erlaubt stattdessen die Herstellung der Elemente in einer herkömmlichen Stanzpresse, die mit einem Folgeverbundwerkzeug ausgestattet wird, um die einzelnen Herstellungsschritte durchzuführen. Die Herstellung in einer Stanzpresse unter Anwendung eines Folgeverbundwerkzeuges ist im Vergleich zu der Anwendung von Kaltschlagmaschinen besonders kostengünstig. Die Herstellung auf einer Transferpresse ist unter denselben Bedingungen möglich. Der Vorgang des Abtrennens muß dabei in die erste Stufe verlegt werden.

Besonders bevorzugte Varianten des Herstellungsverfahrens sind den Ansprüchen 2 bis 4 zu entnehmen. Besonders günstige Profile zur Herstellung von Hohlkörperelementen unter Anwendung des erfindungsgemäßen Verfahrens können durch Kaltwalzen hergestellt werden, beispielsweise aus einem 35 B2 Stahlmaterial.

Weitere Vorteile des erfindungsgemäßen Verfahrens sind der nachfolgenden Beschreibung von bevorzugten Ausführungsbeispielen, die anhand der Zeichnung näher erläutert werden, zu entnehmen. In der Zeichnung zeigen:
- Fig. 1: eine perspektivische Darstellung eines Abschnittes eines ersten Profils zur Herstellung von Hohlkörperelementen,
- Fig. 2A - F: eine Reihe von Zeichnungen, die die einzelnen Verfahrensschritte zeigen, die erforderlich sind, um ein Hohlkörperelement aus dem Profil gemäß Fig. 1 herzustellen,
- Fig. 3: eine teilweise geschnittene Zeichnung zur Erläuterung der Durchführung des Durchsetzvorgangs gemäß Fig. 2B in einer Station eines Folgeverbundwerkzeuges innerhalb einer Stanzpresse,
- Fig. 4A-F: eine Reihe von Zeichnungen, um die genaue Form des aus dem Profil gemäß Fig. 1 hergestellten Hohlkörperelementes anzugeben,
- Fig. 5: eine perspektivische Darstellung eines Abschnittes eines weiteren Profils zur Herstellung von Hohlkörperelementen,
- Fig. 6A-E: eine Reihe von Zeichnungen, um die genaue Form des aus dem Profil gemäß Fig. 5 hergestellten Hohlkörperelementes anzugeben,
- Fig. 7: eine perspektivische Darstellung eines Abschnittes eines noch weiteren Profils zur Herstellung von Hohlkörperelementen,
- Fig. 8A-E: eine Reihe von Zeichnungen, um die genaue Form des aus dem Profil gemäß Fig. 7 hergestellten Hohlkörperelementes anzugeben,

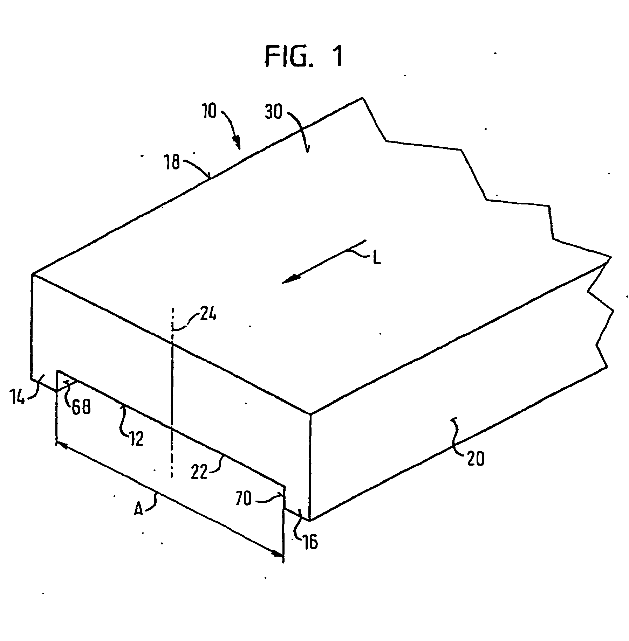

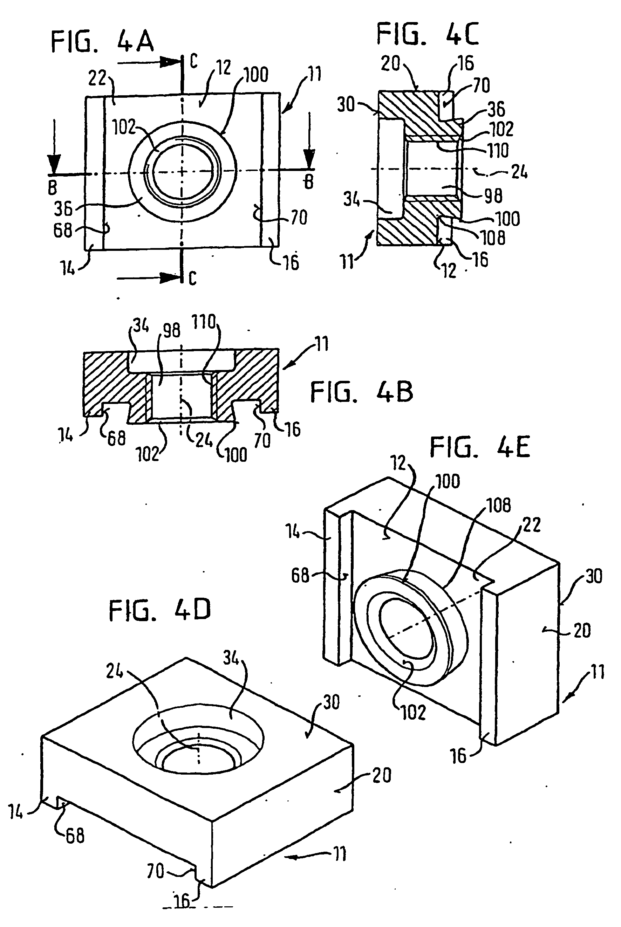

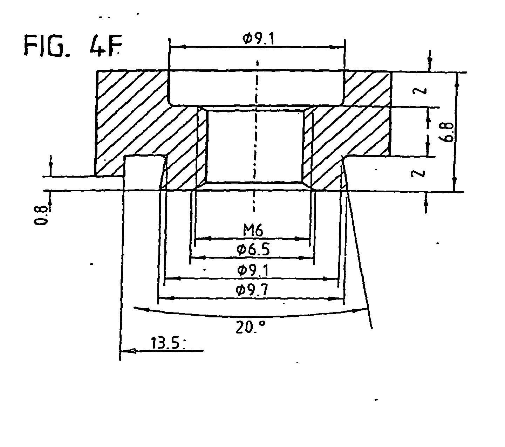

Figur 1 zeigt eine perspektivische Darstellung eines ersten Profils 10, das zur Herstellung von Hohlkörperelementen 11 (Fig. 4) verwendet werden kann. Das Profil 10 liegt entweder in Form einer Stange von beispielsweise 6 Metern Länge vor oder wird vom Materialhersteller in Form eines Wickels geliefert. Es handelt sich um ein kalt gewälztes Profil. Bevorzugte Materialien sind alle Stahlsorten nach DIN 1654, aber auch NE-Metalle wie Aluminium, o. Ä.

Das Profil ist im Querschnitt zumindest im wesentlichen rechteckig und weist zusätzlich auf der später dem Bauteil zugewandten Seite 12 zwei voneinander einen Abstand A aufweisende Balken 14 und 16, die parallel zu den Längsseiten 18 und 20 des Profils 10 verlaufen und im Querschnitt ebenfalls im wesentlichen rechteckig sind. Man kann die Form des Profils auch so betrachten, dass es zumindest im wesentlichen rechteckig ist mit einer breiten, jedoch nicht sehr tiefen Nut 22 von im wesentlichen rechteckigem Querschnitt auf der dem Bauteil zugewandten Seite 12, wobei die Nut 22 ebenfalls parallel zu den Längsseiten 18, 20 des Profils verläuft.

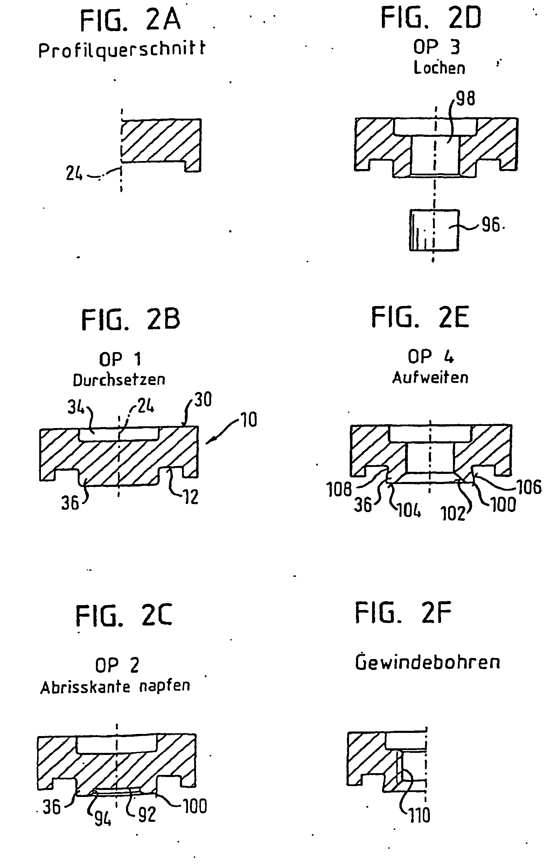

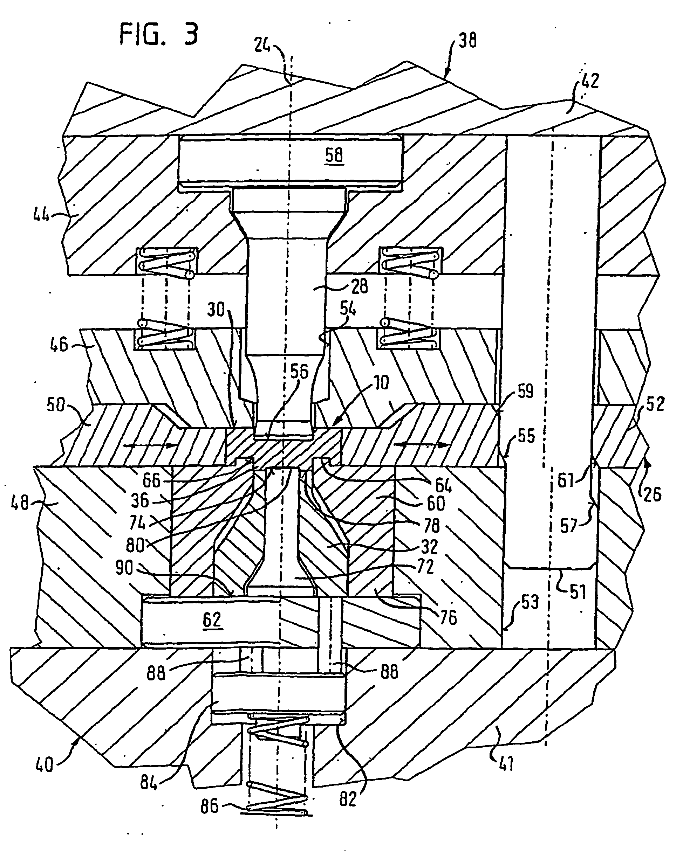

Aus dem Profil gemäß Fig. 1 wird in diesem Beispiel ein Element 11 gemäß Figuren 4A - F hergestellt, wobei die allgemeine Form des Elementes ohne weiteres aus Fig. 4 ersichtlich ist und erst später genauer beschrieben wird. Zunächst wird das Herstellungsverfahren anhand der Figuren 2A - F und unter Bezugnahme auf Fig. 3 näher erläutert. Figuren 2A - F zeigen alle einen Querschnitt (teilweise nur zur Hälfte) durch das Profil 10 der Figur 1 senkrecht zu dessen Längsrichtung L, wobei die Achse 24 in Figur 2 der Achse 24 der Figur 1 entspricht und senkrecht zu der Längserstreckung L des Profils 10 angeordnet ist. Auch die Querschnittsebene steht senkrecht zur Längsrichtung L.

Das Profil 10 läuft in Längsrichtung L in einer mit einem Folgeverbundwerkzeug 26 (Figur 3) ausgestatteten Stanzpresse 38, wobei das Folgeverbundwerkzeug fünf Stationen aufweist zur Durchführung der in Fig. 2A-E gezeigten Schritte. Die erste Station ist im Querschnitt in Fig. 3 gezeigt und dient dem Durchsetzvorgang gemäß Fig. 2B. Bei diesem Vorgang wird mittels eines Stempels 28, der in Fig. 3 und Fig. 2B von oben kommend auf die Oberseite 30 des Profils 10 drückt und mittels einer unterhalb des Profilstabes 10 angeordneten Matrize 32 (Fig. 3) ein Materialfluss lokal im Profil 10 im Bereich der Achse 24 erzeugt, so dass eine zylindrische Vertiefung 34 in der Oberseite 30 des Profilstabes 10 und ein zylindrischer Vorsprung 36 auf der Bauteilseite 12 des Profilstabes 10 erzeugt wird. Dabei entspricht das Volumen der zylindrischen Vertiefung 34 dem Volumen 36 des zylindrischen Vorsprungs.

Wie bereits erwähnt, zeigt die Fig. 3 eine teilweise geschnittene Darstellung einer ersten Station eines Folgeverbundwerkzeugs 26, das in einer Stanzpresse 38 angeordnet ist, wobei nur ein Teil der Stanzpresse und ein Teil des Folgeverbundwerkzeugs dargestellt ist.

Konkret sieht man in Fig. 3 das an der unteren Gestellplatte der Stanzpresse montierte untere Werkzeug 40 der Stanzpresse, das zur Aufnahme der Matrize 32 sowie andere Teile dient und die obere Gestellplatte 42 der Stanzpresse, an der ein oberes Werkzeug 44 und ein Niederhalter 46 montiert sind. Alternativ hierzu kann es sich bei der Platte 42 um eine Zwischenplatte der Stanzpresse handeln.

Wie gezeigt, wird das Profil 10 auf allen Seiten in der Presse abgestützt.

Zu diesem Zweck weist das untere Werkzeug 40 eine Aufnahme- oder Abstützplatte 48 auf, welche die Matrize 32 aufnimmt und zwei weitere Platten 50 und 52 abstützt, die links und rechts vom Profil 10 angeordnet sind. Die Platten 50 und 52 bilden eine Führung, durch welche der Profilstab 10 in eine Richtung senkrecht zur Ebene der Zeichnung Schritt für Schritt weiterbewegt werden kann. Der Niederhalter 46, der mittels der dargestellten, am oberen Werkzeug 44 abgestützten Feder nach unten gedrückt wird, befindet sich in Anlage mit den Oberseiten der Platten 50 und 52 sowie mit der Oberseite 30 des Profils 10. Der Niederhalter 46 hat eine zylindrische Öffnung in Form einer abgesetzten Bohrung 54, durch welche der Stempel 28 hindurch reicht und somit mit seinem Stirnende 56 in Anlage gegen die Oberseite 30 des Profils 10 gelangen kann. An seinem oberen Ende ist der Stempel 28 im oberen Werkzeug 44 gehalten und wird mit dem Ausgleichsdruckstück 58 der oberen Gestellplatte 42 der Presse bei der Schließbewegung der Presse nach unten gedrückt, bis er die Position gemäß Fig. 3 erreicht hat, und damit den zylindrischen Vorsprung 36 ausgeformt ist. Die Form des zylindrischen Vorsprungs ist durch die Form der Matrize 32 bestimmt. Diese besteht aus einem äußeren Teil 60, der über ein Druckstück 62 an der untersten Platte 41 des Werkzeugs 40 abgestützt ist und somit gegenüber der unteren Platte (nicht gezeigt) der Presse unbeweglich, da die Platte 41 des Werkzeugs 40 an der unteren Platte der Presse befestigt ist.

Der äußere Teil 60 der Matrize weist einen Vorsprung 64 auf, der in der U-förmigen Nut 22 in der Unterseite des Profils 10 im Bereich dieser Station des Folgeverbundwerkzeuges hineinpasst und eine mittlere kreisrunde Bohrung 66 aufweist, in die das Material des Profils lokal einfließen kann, um den Ringvorsprung 36 auszubilden. Der Vorsprung 64 weist eine Höhe auf entsprechend der Tiefe der U-förmigen Nut 22 und liegt außerdem an den inneren Seitenflächen 68, 70 der zwei Balken 14 und 16 des Profils 10. Die Matrize 32 weist auch einen mittig angeordneten, zylindrischen Pfosten 72 auf, dessen obere Stirnseite 74 in Fig. 3 einen Teil der Unterseite des zylindrischen Vorsprungs 36 abstützt. Die Stirnseite des Pfostens 72 kann leicht ballig ausgeführt sein und um einen geringen Betrag oberhalb des Zylinders 76 liegen, um die nachfolgenden Umformungen des Profils 10 zu unterstützen. Der Pfosten 72 ist unbeweglich und an seinem unteren Ende an einer Platte 62 abgestützt. Der Pfosten 72 befindet sich außerdem innerhalb eines konzentrisch zu ihm angeordneten Zylinders 76, der an seinem unteren Ende ebenfalls auf dem Druckstück 62 abgestützt ist und an seinem oberen Ende eine zylindrische Ringfläche aufweist, die in einer Ebene mit der oberen Stirnseite 74 des Pfostens 72 liegt und mit dieser die untere Begrenzung für den durch die Wirkung des Stempels 28 gebildeten zylindrischen Vorsprung 36 bildet.

Unterhalb der Platte 62 und in einer abgesetzten Bohrung 82 der untersten Platte 41 des Werkzeuges 40 befindet sich ein bewegliches Druckstück 84, das durch eine in dieser abgesetzten Bohrung 82 konzentrisch angeordneten Feder 86 nach oben vorgespannt wird. Oberhalb des Druckstückes 84 befinden sich drei zylindrische Stifte 88, von denen nur zwei in der Figur 3 zu sehen sind, die aber winkelmäßig um 120° zueinander versetzt um die mittlere Längsachse 24 angeordnet sind und sich durch entsprechende Bohrungen im Druckstück 62 erstrecken und die untere Stirnseite 90 des zylindrischen Teils 76 der Matrize berühren.

Bei dem Durchsetzvorgang reicht die Kraft des Stempels 28 (erzeugt durch die Stanzpresse) aus, um durch Materialfluss innerhalb des Profils 10 den zylindrischen Teil 76 der Matrize nach unten in die dargestellte Position zu drücken, so dass das Druckstück 84 ebenfalls die in Figur 3 dargestellte Stellung annimmt.

Bei der Öffnung der Stanzpresse, um den nächsten Hub der Stanzpresse durchzuführen, bewegt sich das obere Werkzeug 44 mit dem Stempel 28 und phasenverschoben dem Niederhalter 46 nach oben weg von den Platten 50 und 52 und die Kraft der Feder 86 reicht dann aus, um über das Druckstück 84 und die Stifte 88 den zylindrischen Teil 76 der Matrize nach oben zu verschieben, so dass ihre obere ringförmige Stirnseite 78 bündig mit der oberen Seite des Vorsprungs 78 liegt und das Profil 10 dabei so angehoben wird, dass der zylindrische Vorsprung 36 nicht mehr vertieft in der Matrize angeordnet ist, sondern oberhalb der Matrize sich befindet, so dass es weitertransportiert werden kann in die nächste Station des Folgeverbundwerkzeuges (nicht gezeigt). Zusätzlich werden die Platten 50 und 52 über ein seitlich angebrachtes Schiebersystem horizontal auseinander bewegt, um das Profil 10 leichter anheben zu können. Beispielsweise können auf der rechten und linken Seite des oberen Werkzeuges 44 in Fig. 3 Schieber fest angebracht werden (nur ein Schieber gezeigt), die mit ihren unteren Enden in jeweilige Führungen 53 in der unteren Aufnahmeplatte 48 geführt sind und im Bereich der Platten 50, 52 Schrägflächen 55, 57 aufweisen, die mit entsprechenden Schrägflächen 59, 61 an Öffnungen der Platten zusammenarbeiten, um die Bewegung der Platten entsprechend den in den Platten gezeigten Doppelpfeilen bei jedem Hub der Presse zu bewirken. Dabei gelangt ein neuer Abschnitt des Profils 10 in den Bereich der Matrize 32, so dass durch Schließen der Presse ein weiterer zylindrischer Vorsprung 36 erzeugt werden kann. Der Abschnitt des Profils 10, der bisher in der Durchsetzstation des Folgeverbundwerkzeuges sich befunden hat, weist nun die Querschnittsform gemäß Fig. 2B auf, wozu zu sagen ist, dass das Volumen der ringförmigen Vertiefung 34 dem Volumen des zylindrischen Vorsprungs 36 entspricht.

In der nächsten Station des Folgeverbundwerkzeuges (nicht gezeigt) wird der Abschnitt gemäß Fig. 2B nunmehr genapft, d.h. mit der ringförmigen Vertiefung 92 gemäß Fig. 2C versehen. Diese ringförmige Vertiefung oder Napf 92 definiert eine Abrisskante 94, welche von Vorteil ist, um in der nachfolgenden Station des Folgeverbundwerkzeuges eine saubere Ausstanzung des Stanzbutzens 96 unter Ausbildung der Lochung 98 gemäß Fig. 2D zu erreichen.

Um den Napf 92 gemäß Fig. 2C zu erzeugen, weist das Folgeverbundwerkzeug in der zweiten Station im Prinzip die gleiche Gestaltung wie in der Zeichnung gemäß Fig. 3 auf, nur hat der mittlere Pfosten 72 an seinem oberen Stirnende eine Gestalt entsprechend dem Napf 92 und ragt um die axiale Tiefe des Napfes oberhalb der oberen Stirnseite 78 des zylindrischen Teils 76 der Matrize hervor. Die Ausbildung des Napfes erfolgt gleichzeitig mit der Erzeugung des zylindrischen Vorsprungs 36. Bei der Ausbildung des Napfes wird gleichzeitig die Form des zylindrischen Vorsprungs 36 korrigiert, so dass dieser eine genau definierte scharfe Ausbildung im Bereich der Kante 100 aufweist.

Nach der Ausbildung des Napfes 92 und der Korrektur der Form des zylindrischen Vorsprungs 36 wird das Profil nochmals aus der Matrize herausgehoben und um einen Schritt weiter transportiert zu der Station, wo die Lochung gemäß Fig. 2D erfolgt. Diese Station ist auch im Prinzip ähnlich der Figur 3 ausgebildet, nur fehlt hier der mittlere Pfosten 72 und die Station weist stattdessen eine Bohrung auf, die einen Kanal zur Entsorgung der Stanzbutzen 96 bildet.

Nach Fertigstellung der Lochung gemäß Fig. 2D wird das Profil noch einmal aus der entsprechenden Matrize herausgehoben und um einen weiteren Schritt transportiert in eine Station, wo der Aufweitvorgang durchgeführt wird, damit der zylindrische Vorsprung 36 die Form bekommt, die in der Fig. 2E gezeigt ist. Man merkt, dass die untere Stirnseite des zylindrischen Vorsprungs 36 mit einer konusförmigen Vertiefung 102 versehen worden ist, die eine Fase bildet, wobei die Konusform in Richtung der freien Stirnseite 104 des zylindrischen Vorsprungs 36 divergiert. Um diese Formgebung zu erreichen, wird die entsprechende Station des Folgeverbundwerkzeuges im Prinzip auch entsprechend der Figur 3 ausgebildet, nur wird hier der mittlere Pfosten 72 im Bereich seines oberen Stirnendes mit einer entsprechenden konusförmigen Fase versehen.

Im übrigen ist im Bereich der Außenmatrize 60 ein Freiraum vorgesehen (nicht gezeigt), damit bei der Ausbildung der konusförmigen Vertiefung 102 die äußere Seitenwand 106 des zylindrischen Vorsprungs 36 die konusförmig nach unten divergierende Form gemäß Fig. 2E erhält und hierdurch eine ringförmige Hinterschneidung 108 um den Ringvorsprung 36 herum gebildet wird.

Nach dem Aufweitvorgang gemäß Fig. 2E wird das Profil 10 wieder aus der Matrize herausgehoben, auch hier durch einen zylindrischen Teil der Matrize ähnlich dem Teil 76 und das Profil wird um einen Schritt weiter transportiert, und zwar in eine letzte Station des Folgeverbundwerkzeuges, wo ein Abschnitt des Profils mit der Länge des Elementes 11 gemäß Fig. 4 abgeschnitten wird. Das so gefertigte Element mit der Lochung 98 wird nun in eine Vorrichtung transportiert, wo an sich bekannter Weise das Gewinde 110 gemäß Fig. 2F gebohrt wird. Bei manchen Anwendungen wird das Hohlkörperelement ohne Gewinde belassen. Beispielsweise könnte die Lochung 98 als Führung gedacht werden, oder zur Aufnahme eines Einsteckteils ausgebildet werden. Darüber hinaus wird häufig im Automobilbau mit gewindeschneidenden oder gewindeformenden Schrauben gearbeitet, so dass das Gewinde 110 erst nach der Anbringung des Hohlkörperelementes an ein Blechteil mit einem Gewinde unter Anwendung einer solchen gewindeschneidenden oder gewindeformenden Schraube versehen wird.

Es sind verschiedene Modifikationen möglich. Einerseits könnte die Ablangung der einzelnen Elemente vom Profil vor dem Aufweitvorgang gemäß Figur 2E stattfinden, wobei der Aufweitvorgang dann auch zur Korrektur der äußeren Formgebung des Elementes dienen könnte, in dem Sinne, dass etwaige Verformungen bei der Ablangung des Elementes korrigiert werden.

Weiterhin ist es möglich, den Durchsetzvorgang mit einem Stempel durchzuführen, der im Bereich seiner das Durchsetzen herbeiführende Stirnende einen Durchmesser aufweist, der zumindest im wesentlichen dem Durchmesser des Lochstempels für die Durchführung des Lochvorganges entspricht. Dies hat zwei Vorteile. Einerseits ist der Durchmesser der ringförmigen Vertiefung 34 dann gleich groß wie der Durchmesser der anschließenden Lochung 98, so dass der Bereich der Vertiefung 34 einen Teil des Gewindezylinders bilden kann und die Bauhöhe des Elementes entsprechend niedriger ausfallen kann. Da der zylindrische Vorsprung 36 die Form gemäß Fig. 2B behält und das Volumen des zylindrischen Vorsprungs 36 dem Volumen der zylindrischen Vertiefung 34 entspricht, fällt die axiale Länge der zylindrischen Vertiefung 34 aufgrund des kleineren Durchmessers des Stempels 28 größer aus, so dass die Dicke des Bereiches des Profils, der beim Lochvorgang gemäß Fig. 2D durchlocht werden muss, kleiner ist und der Lochvorgang leichter vonstatten geht, so dass der Verschleiß am Lochstempel geringer wird.

Wenn das Verfahren so durchgeführt wird wie in den Figuren 2A bis 2E gezeigt, so entsteht ein Mutterelement 11 mit der Gestalt gemäß den Figuren 4A bis 4F. Die entsprechenden Bezugszeichen aus den bisherigen Figuren sind hier eingetragen und sind entsprechend der bisherigen Beschreibung so zu verstehen.

Konkret zeigt die Figur 4B den Querschnitt durch das Mutterelement 11 gemäß Fig. 4A an der Schnittebene B-B, während Figur 4C den Querschnitt senkrecht dazu entsprechend der Schnittebene C-C zeigt. Die Figur 4D zeigt eine perspektivische Darstellung des Elementes 11 von der rechten Seite und von vorne bei einer schräg nach unten gerichteten Betrachtung, während die Figur 4E eine perspektivische Darstellung des Mutterelementes 11 von der Unterseite zeigt.

Figur 4F gibt die konkreten Abmessungen des Elementes an, wenn das Gewinde für eine M6-Schraube ausgelegt ist. In der Darstellung gemäß Fig. 4F entspricht die linke Hälfte der Querschnittszeichnung der linken Seite von Fig. 4B, während die rechte Hälfte der Schnittzeichnung gemäß Fig. 4F dem halben Querschnitt des Elements 11 in Richtung der Längsrichtung L des ursprünglichen Profils entspricht.

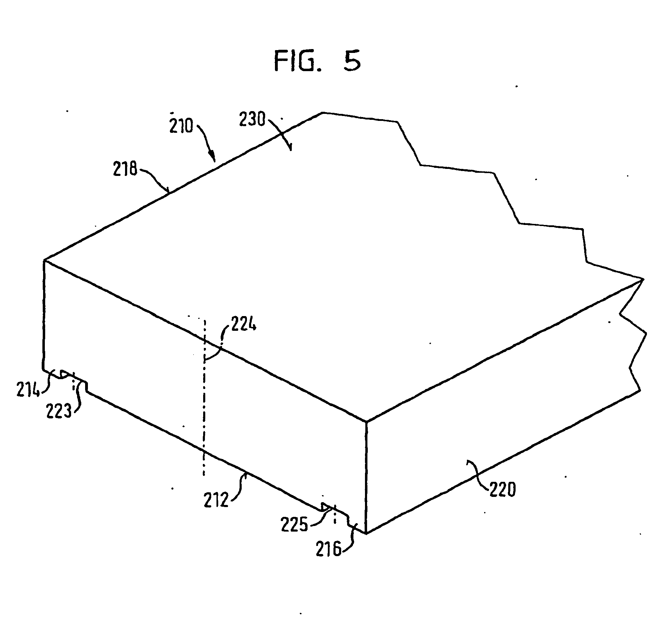

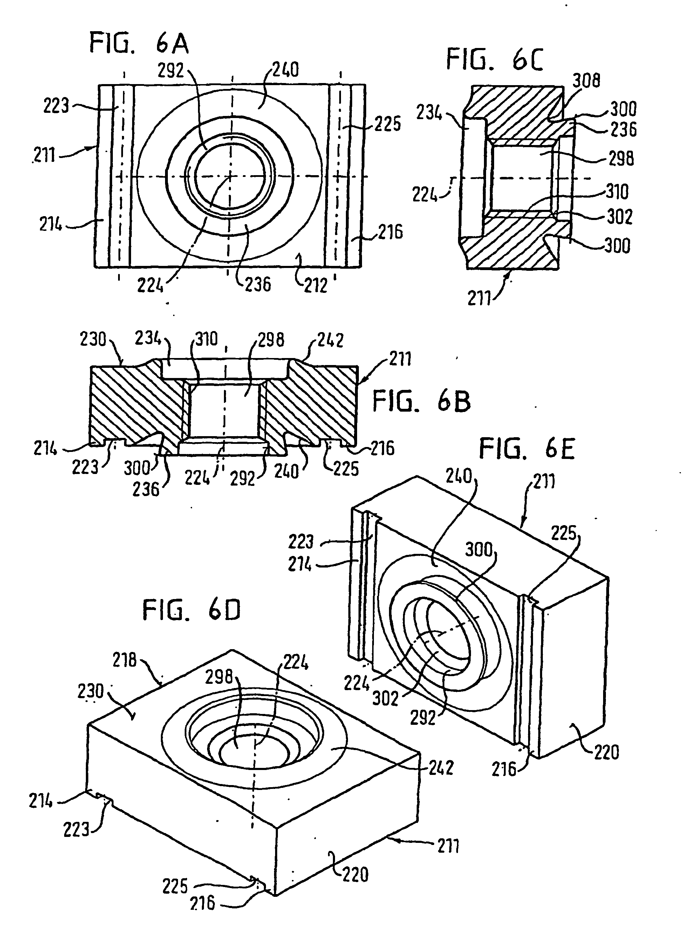

Es wird nun ein weiteres Ausführungsbeispiel unter Bezugnahme auf die Zeichnungen gemäß Figuren 5 und 6A-6E beschrieben.

Für diese Beschreibung werden die gleichen Bezugszeichen verwendet wie bei der ersten Ausführungsform gemäß Fig. 1 bis 4, jedoch um die Grundzahl 200 erhöht. Teile, die mit dem gleichen Bezugszeichen versehen sind, d.h. nach Abzug der Grundzahl 200 haben die gleiche Funktion, bzw. die gleiche Ausbildung wie die entsprechenden Teile der ersten Ausführungsform gemäß Figuren 1 bis 4, so dass die dort gegebene Beschreibung auch für die entsprechenden Teile dieser Ausführungsform gelten, es sei denn, es wird etwas Gegenteiliges gesagt. Es werden hauptsächlich die Unterschiede beschrieben.

Das Profil 210 der Figur 5 hat auch hier einen im wesentlichen rechteckigen Querschnitt, wobei in der Bauteilseite 212 des Profils hier im Gegensatz zu der Ausführung gemäß Fig. 1 zwei Nuten 223 und 225 durch einen Kaltwalzvorgang gebildet sind, die jeweils rechteckige Querschnitte aufweisen und parallel zu den Längsseiten 218 bzw. 220 des Profils 210 verlaufen, so dass auch hier zwei balkenförmige Bereiche 214 und 216 gebildet werden.

Das Profil 210 gemäß Figur 5 wird in einer Stanzpresse mittels eines Folgeverbundwerkzeuges ähnlich dem bisher beschriebenen Folgeverbundwerkzeug verarbeitet, um Mutterelement gemäß Figur 6A bis 6E zu erzeugen.

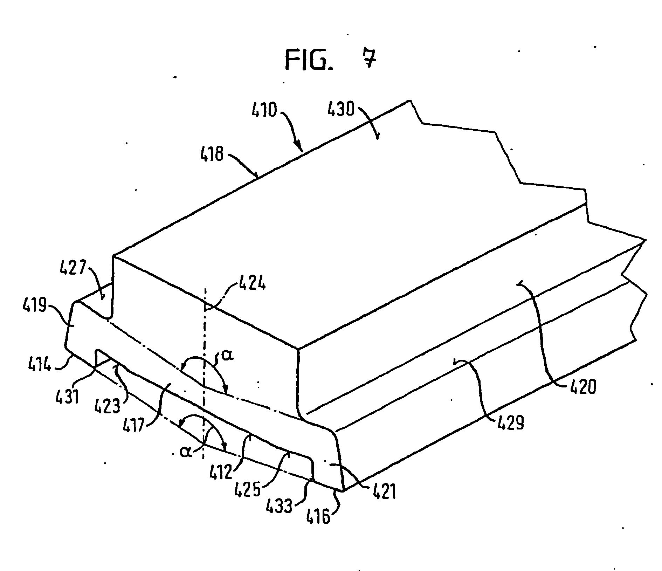

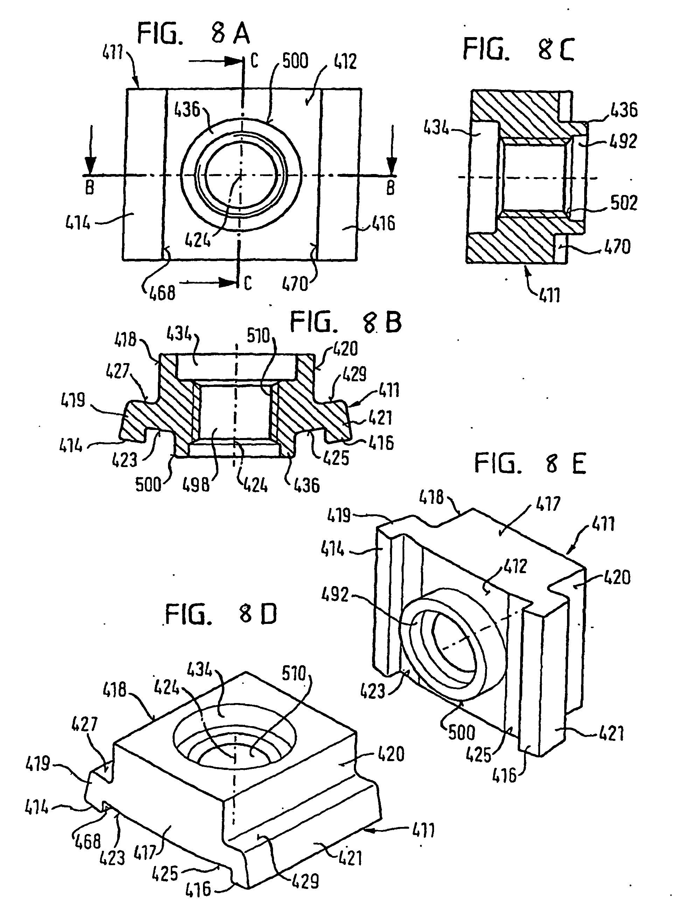

Bei der Herstellung des Mutterelementes 211 gemäß Fig. 6A bis E fasst das Folgeverbundwerkzeug eine weitere Station im Vergleich zu dem bisher beschriebenen Folgeverbundwerkzeug. In dieser zusätzlichen Station, die die erste Station beim Einlaufen des Profils bildet, wird in einer Art umgekehrten Durchsetzvorgang zunächst eine konusförmige Vertiefung 240 in der Unterseite 12 des Profils eingedrückt, wodurch eine entsprechende konusförmige Erhebung 242 an der oberen Seite 230 des Profils entsteht, wobei sowohl die konusförmige Vertiefung 240 als auch die konusförmige Erhebung 242 konzentrisch zur Achse 224 des Elementes angeordnet sind. Nach Ausbildung der konusförmigen Vertiefung 240 und der konusförmigen Erhebung 242 in der ersten Station des Folgeverbundwerkzeuges wird dann die zylindrische Vertiefung 234 und der zylindrische Vorsprung 236 und anschließend der Napf 292 und die Lochung 298 in weiteren Stationen des Folgeverbundwerkzeuges erzeugt in der gleichen Art und Weise wie im Zusammenhang mit den Figuren 2 und 3 beschrieben wurde. In der letzten Station des Folgeverbundwerkzeuges wird dann das Element 211 vom Profilstab 210 durch einen Schervorgang abgetrennt. Die genaue Endform des Hohlkörperelementes geht einwandfrei aus den Figuren 6A bis 6E hervor. Die Anbringung des Elementes 211 auf ein Bauteil 213 erfolgt unter Anwendung einer Matrize.
Es wird nun eine dritte Ausführungsform beschrieben, und zwar unter Bezugnahme auf die weiteren Zeichnungen der Fig. 7 und 8A-8E.

Für diese Beschreibung werden die gleichen Bezugszeichen verwendet wie bei der ersten Ausführungsform gemäß Fig. 1 bis 4, jedoch um die Grundzahl 400 erhöht. Teile, die mit dem gleichen Bezugszeichen versehen sind, d.h. nach Abzug der Grundzahl 400, haben die gleiche Funktion bzw. die gleiche Ausbildung wie die entsprechenden Teile der ersten Ausführungsform gemäß Figuren 1 bis 4, so dass die dort gegebene Beschreibung auch für die entsprechenden Teile dieser Ausführungsform gilt, es sei denn, es wird etwas Gegenteiliges gesagt. Es werden hauptsächlich die Unterschiede beschrieben.

Bei der dritten Ausführungsform gemäß Fig. 7 weist das Profil 410 einen mittleren Bereich 417 mit einem zumindest im wesentlichen rechteckigen Querschnitt auf und links und rechts davon integrale Flügeln 419 und 421, die sich auf der Bauteilseite 412 über den mittleren Bereich 417 hinaus erstrecken und dort zwei Balken 414 und 416 bilden, die parallel zu den Längsseiten 420 des Profils verlaufen und über eine schräge Vertiefung 423 bzw. 425 in die Unterseite des mittleren Bereiches 417 des Profils übergehen. Dabei weisen die Oberseiten 427 und 429 der beiden Flügel 419 bzw. 421 einen deutlichen Abstand von der oberen Seite 430 des mittleren Bereiches 417 des Profil 410 auf und bilden hierdurch Schultern, die schräg zu den Seitenwänden des mittleren Bereiches stehen und miteinander einen Winkel α einschließen, der bezogen auf die der Bauteilseite 412 abgewandten Seite 430 des Profils etwas kleiner als 180° ist und beispielsweise im Bereich von 175° bis 160° liegt.

Die Unterseite der Balken 414 und 416 sind entsprechende der Schultern 427 und 429 schräg gestellt, d.h. bilden den gleichen Winkel α miteinander. Die schrägen Übergangsbereiche 423 und 425 sind ebenfalls parallel zu den durch die Schultern 427 und 429 gebildeten Schrägflächen, so dass auch sie einen entsprechenden Winkel α miteinander bilden. Diese Schrägstellung der Flügel 419 bzw. 421 gegenüber dem mittleren Bereich 417 erfolgt durch die Herstellung des Profils 410 durch Kaltwalzen und hat einen besonderen Vorteil, der etwas später erläutert wird.

Abgesehen von der besonderen Ausbildung der Flügel 419 bzw. 421 entspricht die Form des Profils 410 im wesentlichen der der Ausführungsform gemäß Fig. 1 und die Herstellung von Mutterelementen aus dem Profil 410 erfolgt im Prinzip in der gleichen Art und Weise wie die Herstellung der Mutterelemente gemäß Fig. 4 wie bisher beschrieben wurde mit Bezug auf die Figuren 2 und 3. Das Herstellungsverfahren wird somit hier nicht im Detail erörtert. Man sieht jedoch aus den Figuren 8A bis 8E, welche das Mutterelement in der fertigen Form zeigen und aus den dort eingesetzten Bezugszeichen, dass dieses Element eine große Ähnlichkeit zu dem Element gemäß den Fig. 4A bis F aufweist.

Ein Unterschied liegt aber hier darin, dass der zylinderförmige Vorsprung 436 keine Hinterschneidung aufweist, wobei dies aber nicht zwingend erforderlich ist und der Ringvorsprung 436 die gleiche Form aufweisen könnte, wie der entsprechende ringförmige Vorsprung 36 der Ausführungsform gemäß Fig. 4.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Verfahren zur Herstellung von Hohlkörperelementen (11; 211; 411), wie Mutterelemente, zur Anbringung an üblicherweise aus Blech bestehenden Bauteilen (13; 213; 413), insbesondere zur Herstellung von Hohlkörperelementen mit einem zumindest im Wesentlichen quadratischen oder rechteckigen Außenumriss durch Ablängung einzelner Elemente von einem in Form einer Profilstange oder eines Wickels vorliegenden Profil (10; 210; 410) nach vorheriger Stanzung von jeweiligen Löchern (98; 298; 498) in das Profil und gegebenenfalls mit anschließender Ausbildung eines Gewindezylinders (110; 310; 510), wobei vor einer Lochung eines Profils ein Durchsetzvorgang durchgeführt wird, um durch Materialfluss einen konzentrisch zur vorgesehenen Lochung zylindrischen oder ringförmigen Vorsprung (36; 236; 436) auf der dem Bauteil zugewandten Seite (12; 212; 412) des Profils zu erzeugen,
**dadurch gekennzeichnet,**
**dass** ein Napfvorgang gleichzeitig mit der Ausbildung des zylindrischen Vorsprungs erfolgt, d.h. mit dem Durchsetzvorgang durchgeführt wird,
**dass** der Durchsetzvorgang, bei dem mittels eines Durchsetzstempels eine zylindrische Vertiefung in der einen Seite des Profils und ein zylindrischer Vorsprung auf der anderen Seite des Profils erzeugt wird, unmittelbar von dem Lochvorgang gefolgt wird, bei dem das Profil im Bereich der zylindrischen Vertiefung mittels eines Lochstempels durchlocht wird und dass der Durchmesser des Durchsetzstempels im Bereich seines das Durchsetzen herbeiführenden Stirnendes so gewählt wird, dass er zumindest im Wesentlichen dem Durchmesser des Lochstempels entspricht.

2. Verfahren nach Anspruch 1,
**dadurch gekennzeichnet,**
**dass** die Herstellung der Elemente, abgesehen von dem Abschneiden der einzelnen Elemente vom Profil, in drei Schritten erfolgt, wobei dem Lochvorgang ein Aufweitvorgang folgt.

3. Verfahren nach Anspruch 1,
**dadurch gekennzeichnet,**
**dass** die Ablängung der einzelnen Elemente vom Profil vor dem Aufweitvorgang stattfindet.

4. Verfahren nach Anspruch 3,
**dadurch gekennzeichnet,**
**dass** der Aufweitvorgang der Korrektur der äußeren Formgebung der Elemente dient.

## Claims

1. Method for the manufacture of hollow body elements (11; 211; 411) such as nut elements for attachment to components (13; 213; 413) normally consisting of sheet metal, in particular for the manufacture of hollow body elements having an at least substantially square or rectangular outline by cutting individual elements to length from a section (10; 210; 410) present in the form of a profiled bar or a coil after prior stamping of respective holes (98; 298; 498) into the section and optionally with subsequent formation of a thread cylinder (110; 310; 510), wherein, prior to the punching of holes in the section, an upsetting process is carried out in order to produce by material flow a cylindrical or ring-like projection (36; 236; 436) concentric to the intended punched hole at the side (12; 212; 412) of the section confronting the component,
**characterised in that** an indenting process takes place simultaneously with the formation of the cylindrical projection, i.e. is carried out with the upsetting process, **in that** the upsetting process, in which a cylindrical recess is formed by an upsetting stamp in one side of the section and a cylindrical projection at the other side of the section, is directly followed by the hole punching operation in which the section is holed in the region of the cylindrical recess by means of a hole punch and **in that** the diameter of the upsetting punch is selected in the region of its end which carries out the upsetting so that it corresponds at least substantially to the diameter of the hole punch.

2. Method in accordance with claim 1,
**characterised in that**
the manufacture of the elements, apart from the cutting off of the individual elements from the section, takes place in three steps, with a dilating process following the hole punching process.

3. Method in accordance with claim 1,
**characterised in that**
the cutting to length of the individual elements from the section takes place prior to the dilation process.

4. Method in accordance with claim 3,
**characterised in that**
the dilation process serves for the correction of the outer shape of the elements.

## Revendications

1. Procédé pour fabriquer des éléments creux (11 ; 211 ; 411), comme des éléments écrous, à fixer sur des composants (13 ; 213 ; 413) habituellement en tôle, en particulier pour fabriquer des éléments creux avec un contour extérieur au moins substantiellement carré ou rectangulaire, par tronçonnement d'éléments individuels à partir d'un profilé (10 ; 210 ; 410) se présentant sous la forme d'une barre profilée ou d'un rouleau après un découpage préalable de trous respectifs (98 ; 298 ; 498) dans le profilé, et le cas échéant, avec formation consécutive d'un cylindre taraudé (110 ; 310 ; 510), dans lequel un processus de refoulement est effectué avant une perforation d'un profilé afin de générer par écoulement de matière une saillie cylindrique ou annulaire (36 ; 236 ; 436) concentrique par rapport à la perforation prévue, du coté du profilé (12 ; 212 ; 412) tourné vers le composant,
**caractérisé en ce qu'**une opération d'embouti intervient en même temps que la réalisation de la saillie cylindrique, c'est-à-dire est effectuée avec le processus de refoulement.
**en ce que** le processus de refoulement, lors duquel une cavité cylindrique est générée au moyen d'un poinçon de refoulement sur un côté du profilé et une saillie cylindrique est générée sur l'autre côté du profilé, est suivi directement du processus de perforation, lors duquel le profilé est perforé au moyen d'un poinçon de perforation dans la zone de la cavité cylindrique, et **en ce que** le diamètre du poinçon de refoulement dans la zone de son extrémité avant provoquant le refoulement est choisi de telle sorte qu'il correspond au moins sensiblement au diamètre du poinçon de perforation.

2. Procédé selon la revendication 1,
**caractérisé en ce que**
la fabrication des éléments, indépendamment de la découpe des éléments individuels du profilé, s'effectue en trois étapes, un processus d'élargissement suivant le processus de perforation.

3. Procédé selon la revendication 1,
**caractérisé en ce que** le tronçonnement des éléments individuels du profilé intervient avant le processus d'élargissement.

4. Procédé selon la revendication 3,
**caractérisé en ce que** le processus d'élargissement sert à corriger le formage extérieur des éléments.
